# EUROPÄISCHE PATENTSCHRIFT

(11) **EP 4 286 258 B1**
(45) Veröffentlichungstag und Bekanntmachung des Hinweises auf die Patenterteilung: **14.08.2024**
(21) Anmeldenummer: 23174939.1
(22) Anmeldetag: 23.05.2023
(51) Int. Cl.: B62H 5/06, B62K 19/32

(54) **HERAUSZIEHBARES LENKERSCHLOSS FÜR FAHRRÄDER**
EXTRACTABLE HANDLEBAR LOCK FOR BICYCLES
VERROU DE GUIDON POUR BICYCLETTES AMOVIBLE

(30) Priorität: 02.06.2022 DE 202022103148 U
(43) Veröffentlichungstag der Anmeldung: 06.12.2023
(73) Patentinhaber: Divkovic, Marinko, 79111 Freiburg Baden-Württemberg (DE)
(72) Erfinder: Divkovic, Marinko, 79111 Freiburg Baden-Württemberg (DE)
(74) Vertreter: Tahhan, Nader Isam Mark

(56) Entgegenhaltungen:
- EP-A1- 3 819 197
- CN-U- 201 882 173
- GB-A- 562 170
- US-A- 3 660 995

## Beschreibung

### Einleitung

Die Erfindung betrifft das Gebiet der Sicherungstechnik für Zweiräder. Insbesondere betrifft die Erfindung ein Lenkerschloss für Fahrräder.

### Stand der Technik und Nachteile

Zur Sicherung von Fahrrädern sind verschiedene Hilfsmittel bekannt, welche ein unerwünschtes Entfernen des Fahrrads verhindern oder zumindest erschweren sollen. Einfache Lösungen basieren auf Draht- oder Kettenschlaufen, deren Enden mit einem Schließmechanismus verbunden werden, so dass das Fahrrad entweder "in sich" (z.B. Laufrad am Rahmen) oder an einem feststehenden Gegenstand (Zaun, Laterne, ...) ab- bzw. angeschlossen werden kann. Im ersteren Fall kann das Fahrrad nicht mehr durch Fahren, sondern nur durch Forttragen bewegt werden, in letzteren Fall kann es vom entsprechenden Ort nicht mehr entfernt werden.

Nachteilig an besagten Draht- oder Kettenschlössern ist neben dem hohen Gewicht, welches ein ausreichend sicheres Schloss typischerweise aufweist, die Tatsache, dass es immer separat mitgeführt werden muss. Wird es vergessen, so kann das Fahrrad überhaupt nicht abgeschlossen werden; wenn es dabei ist, muss es in geeigneter Weise untergebracht sein, bis man es benötigt. Zudem können die Metallteile derartiger Schlösser leicht zu einer Beschädigung der Lackierung oder gar der Rahmenrohre des Fahrrads führen. Da alle Teile derartiger Schlösser gut zugänglich sind, bieten sich einem Dieb vielfältige Möglichkeiten des Öffnens durch Zerstörung oder Manipulation des Schlosses bzw. des Schließmechanismus.

Bekannt sind ferner permanent am Rad angebrachte Schlösser, die somit nicht vergessen werden können oder umständlich verstaut werden müssen. Ein Beispiel für ein solches Schloss ist ein am Hinterbau befestigtes, zwischen die Speichen des Hinterrades einschwenkbares und in dieser Position verriegelbares Speichenschloss, offenbart in Druckschrift DE 25 16 791 A1. Allerdings ist auch ein solches Schloss aufgrund seiner Zugänglichkeit von einem Dieb manipulier- oder zerstörbar. Bekannt sind außerdem in das Steuer- bzw. Gabelschaftrohr eines Fahrrades integrierte Lenkerschlösser, beispielsweise aus der Druckschrift US 3 660 995 A. Diese weisen jedoch den Nachteil auf, dass der Schließzylinder auf aufwändige Weise gegen eine Manipulation gesichert werden muss; häufig wird dies durch (zum Lösen nicht vorgesehene) Presspassungen oder Verstiftungen erreicht, wie beispielsweise in der Druckschrift CN 201 882 173 U oder EP 3 819 197 A1 gezeigt. Zudem sind die bekannten Systeme, beispielsweise ein System, wie es in der GB 562 170 A vorgeschlagen wird, nicht für unterschiedliche, und insbesondere nicht die heute weitverbreiteten "Ahead"-Steuersätze, verwendbar, und/oder benötigen eine Vielzahl von Änderungen am vorhandenen Fahrrad, um eingebaut werden zu können. Dieses GB 562 170 A offenbart eine Vorrichtung zum Sichern eines Fahrrades gegen unerwünschte Benutzung nach dem Präambel des Anspruchs 1.

### Aufgabe der Erfindung und Lösung

Der Erfindung liegt demnach die Aufgabe zugrunde, eine Vorrichtung bereitzustellen, welche die Nachteile des Standes der Technik vermeidet.

Demnach soll die Vorrichtung das Fortbewegen eines Fahrrades erschweren, und dabei verliersicher angebracht, und leicht sowie robust sein. Bei der Verwendung soll eine Beschädigung des zu sichernden Fahrrades weitgehend ausgeschlossen bleiben.

Die Aufgabe wird durch eine Vorrichtung nach Anspruch 1 gelöst. Vorteilhafte Ausführungsformen sind den abhängigen Unteransprüchen, der nachfolgenden Beschreibung sowie den Figuren zu entnehmen.

### Beschreibung

Nachfolgend werden die Begriffe "oben" und "unten" so verwendet, dass sie sich auf die Gebrauchs-Einbaulage der Vorrichtung beziehen. Es ist klar, dass die Vorrichtung auch in anderen Ausrichtungen einsetzbar ist (z.B. liegend); die Begriffe dienen demnach nur der beispielhaften Darlegung. Dabei wird davon ausgegangen, dass ein mit der Vorrichtung bestücktes Fahrrad aufrecht steht und die Vorrichtung von oben her betätigbar ist.

Die Vorrichtung dient dem Sichern eines Fahrrades gegen unerwünschte Benutzung, indem das Fahrrad zum Fahren oder Schieben untauglich gemacht wird. Dies geschieht erfindungsgemäß durch ein Blockieren des Lenkers in einer festen, bevorzugt in einer Kurvenfahrt resultierenden Position.

Die Vorrichtung umfasst einen bevorzugt zylinderförmigen Grundkörper, welcher zum Einbau in das Gabelschaftrohr einer Fahrradgabel eingerichtet und verdrehsicher mit diesem verbindbar ist. Denkbar sind auch andere, beispielsweise quadratische oder vieleckige Grundformen; die Form eines (Hohl-)Zylinders ist jedoch bevorzugt, da diese auch der Innenform des Gabelschaftrohrs entspricht, und maximalen Platz zu Aufnahme weiterer Komponenten aufweist. Zur Verdrehsicherung kann der Grundkörper mittels einem oder bevorzugt mehreren, am Umfang verteilten Gewindestiften (Madenschrauben) klemmend an der Innenwand des Gabelschaftrohrs befestigt sein. Letzteres kann hierfür an entsprechender Stelle Rund- oder (in längsaxialer Richtung verlaufende, einen axialen Versatz ausgleichende) Langlöcher aufweisen. Hierdurch wird neben dem Kraft- auch ein Formschluss bereitgestellt.

Die Vorrichtung umfasst außerdem einen Schließzylinder (z.B. ein Hebelzylinderschloss mit z.B. 90° Schließweg), welcher in das obere Ende des Grundkörpers eingesetzt, dort mit seinem Gehäuse drehsicher verbunden und gegen Herausziehen gesichert ist, beispielsweise mittels eines Sprengringes. Der Schließzylinder umfasst demnach einen Innenteil, welcher den Schüssel aufnimmt, und der dann mittels Drehens des Schlüssels relativ zum Gehäuse des Schließzylinders (Außenteil) zwischen einer ersten ("offenen") und einer zweiten ("Sperr-)Position um die Längsachse rotiert werden kann.

Es ist klar, dass anstelle eines mechanischen Schließzylinders mit Schlüssel auch z.B. elektronische Schließeinrichtungen in Frage kommen. Die Erfindung bietet auch ausreichend Platz für eine ggf. hierfür benötigte Stromversorgung.

An seinem unteren (zur Gabel hin weisenden) Ende weist der Schließzylinder einen exzentrischen Drehschieber auf. Dieser wird beim Drehen des Schließzylinder-Innenteils mit verdreht. Der Drehschieber ist so aufgebaut und positioniert, dass er lediglich in der Sperrposition derart mit einem in radialer Richtung verschiebbar in der Mantelfläche des Grundkörpers angeordneten Sperrbolzen zusammenwirkt, so dass dieser Sperrbolzen von einer Ruheposition, in welcher sein distales Ende vom Steuerrohr des Fahrrades beabstandet ist, in eine Blockierposition vorschiebbar ist, in welcher sein distales Ende direkt oder indirekt mit dem Steuerrohr verriegelnd zusammenwirkt, so dass eine Rotation zwischen Gabelschaftrohr und Steuerrohr blockierbar ist.

Mit anderen Worten, der Drehschieber dient dem Bewegen des Sperrbolzens; der Sperrbolzen ist in radialer (von der Längsachse in Richtung der Mantelfläche des Grundkörpers) ausgerichtet und bewegbar.

In einer Ruheposition ist der Sperrbolzen so weit zurückgezogen, dass er z.B. die Mantelfläche des Grundkörpers oder auch des Gabelschaftrohrs nicht oder nur geringfügig überragt. Somit sind der Grundkörper, das mit ihm verbundene Gabelschaftrohr, und somit auch die Gabel mit Lenker in Relation zum Steuerrohr und somit zum gesamten Rahmen frei beweglich und das Fahrrad in üblicher Weise benutzbar.

In einer Sperrposition des Schließzylinders hingegen ist der Drehschieber so positioniert, dass er den Sperrbolzen betätigt, d.h. in radiale Richtung vorgeschoben, hat. Dann wirkt der Sperrbolzen mit dem Steuerrohr verriegelnd zusammen. In dieser Position ist also das Gabelschaftrohr nicht mehr frei rotierbar im Steuerrohr beweglich, sondern seine Rotation wird über das verriegelnde Zusammenwirken des Sperrbolzens mit dem Steuerrohr blockiert; ein Lenken ist nicht mehr möglich.

Es ist klar, dass das Gabelschaftrohr eine entsprechende Öffnung für den Sperrbolzen aufweisen muss, durch welche dieser hindurchführbar ist; es ist auch möglich, dass der Sperrbolzen schon in der Ruheposition durch diese Öffnung hindurchtritt, solange er nicht mit dem Steuerrohr zusammenwirkt. Die Öffnung kann als Rund- oder als (in längsaxialer Richtung verlaufendes) Langloch ausgestaltet sein.

Das Zusammenwirken kann in einer Position möglich sein, dass das Blockieren bei einem eingeschlagenen Lenker auftritt (z.B. 45°); somit ist auch ein effizientes Wegschieben des Fahrrades aufgrund der fortlaufenden Kurvenfahrt kaum möglich.

Wirken Sperrbolzen und Steuerrohr wie beschrieben zusammen, so ist ein Drehen des Lenkers ohne große Gewaltanwendung, bei welcher nicht nur die Vorrichtung, sondern auch das Steuerrohr in Mitleidenschaft gezogen werden, nicht möglich. Mithin ist eine Zerstörung für einen Dieb, welcher das Fahrrad anschließend benutzen oder veräußern möchte, nicht attraktiv.

Erfindungsgemäß weist der Grundkörper eine innenliegende, mit dem Drehschieber zusammenwirkende Sicherung gegen axiales Herausziehen des Schließzylinders lediglich in Sperrposition auf. Mit anderen Worten, nur in der Sperrposition wird ein axiales Herausziehen des Schließzylinders (zusammen mit dem mit ihm verbundenen Drehschieber) unterbunden; in der Ruheposition hingegen wird ein axiales Herausziehen ermöglicht.

Die Sicherung kann in Form eines Vorsprungs wie insbesondere eines Zapfens oder einer in den Innenraum hineinragenden Schraube vorliegen. Sie kann jedoch auch integriert mit dem angrenzenden Material des Grundkörpers ausgestaltet sein. Sie ist so angeordnet, dass sie erst dann mit einer (teilringförmigen, am Umfang angeordneten) Nut im Drehschieber in Kontakt gelangt, wenn dieser in die Sperrposition fährt. Dann jedoch blockiert sie diesen, und mit ihm den mit ihm verbundenen Schließzylinder, gegen axiales Herausziehen. Demnach ist die Vorrichtung nur dann montier-, vor allem aber demontierbar, wenn sie in der Ruheposition ist.

Denkbar ist auch eine invertierte Konstruktion, d.h. der Drehschieber weist den Vorsprung auf, und die Innenseite des Grundkörpers die entsprechende (Teil-)Nut.

Denkbar ist ferner, dass die (dann prinzipiell umlaufende) Nut zwei oder drei Abschnitte mit einer entsprechenden Anzahl von Unterbrechungen aufweist, und analog dazu zwei bzw. drei am Umfang verteilte Sicherungen vorhanden sind, die in der Ruheposition gerade im Bereich der Unterbrechungen liegen, und in der Sperrposition in den entsprechenden Abschnitten der Nut. Der Vorteil ist eine mechanisch entsprechend stabilere Sicherung gegen Herausziehen (oder auch Einschlagen).

Schließlich kann die Sicherung auch eine von der runden Geometrie abweichende Form aufweisen, beispielsweise eine ovale oder flächige Form (vergleichbar mit einer Nut-und-Feder-Verbindung), was den Vorteil einer größeren Überdeckung in der Sperrposition hat.

Die Erfindung vermeidet somit die aus dem Stand der Technik bekannten Nachteile.

Die Erfindung erschwert effizient das (unerwünschte) Fortbewegen eines Fahrrades. Sie ist aufgrund der Integration in die Steuereinheit verliersicher angebracht, und aufgrund ihrer geringen Größe leicht, und zugleich robust konstruierbar. Die meisten Teile der Vorrichtung sind von außen nicht zugänglich und daher auch vor einer Manipulation oder Zerstörung geschützt; ein Zerstören der Vorrichtung zwecks deren Unbrauchbarmachung führt zu einer Zerstörung oder zumindest signifikanten Beschädigung des Fahrrades. Bei der Verwendung der Vorrichtung ist eine Beschädigung des zu sichernden Fahrrades ausgeschlossen, da die Vorrichtung weiterhin im Inneren der Steuereinheit verbleibt.

Im Gegensatz zum bekannten Stand der Technik erlaubt die erfindungsgemäße Lösung auch ein sehr einfaches und unproblematisches Einstellen eines Steuersatzes, da nach dem Öffnen des Schließzylinders dieser verhältnismäßig einfach ausgebaut werden kann. Das erfindungsgemäße System ist auch für unterschiedliche, und insbesondere "Ahead"-Steuersätze, verwendbar. Zudem werden nur minimale Änderungen am vorhandenen Fahrrad benötigt, damit die Vorrichtung eingebaut werden kann. Auch die integrale Bauweise, wonach praktisch alle mechanischen Komponenten im Grundkörper angeordnet sind, fördert die leichte Integrierbarkeit in bestehende Fahrradrahmen.

Nachfolgend werden verschiedene Ausführungsformen der Erfindung näher beschrieben.

Nach einer Ausführungsform erfolgt das Zusammenwirken mittels formschlüssigen "Eingreifens" des Sperrbolzens in eine im Steuerrohr angeordnete Sperrbohrung. Die Sperrbohrung befindet sich demnach in Verlängerung der Längsachse des Sperrbolzens; durch Eintauchen des Sperrbolzens in die Sperrbohrung verriegelt dieser das Gabelschaftrohr mit dem Steuerrohr. Ein Abscheren des Sperrbolzens ist nur mit erheblichem Kraftaufwand und (bei geeigneter Materialwahl) unter Zerstörung des die Sperrbohrung umgebenden Materials des Steuerrohrs möglich.

Nach einer anderen Ausführungsform erfolgt das Zusammenwirken mittels kraftschlüssigen "Angreifens" des Sperrbolzens an das Innere des Steuerrohrs. Der Sperrbolzen übt demnach (unmittelbar oder mittels geeigneter Zwischenteile) ausreichend hohen Druck auf die Innenwand des Steuerrohrs aus, so dass ein Drehen des Lenkers jedenfalls so weit erschwert wird, dass ein gefahrloses Nutzen des Fahrrades verhindert wird.

Es ist auch denkbar, dass die Vorrichtung zwei oder mehr, vorzugsweise am Umfang gleichverteilte Sperrbolzen aufweist.

Ferner ist denkbar, dass das Verriegeln mittels eines Festklemmens / Verkeilens geeignet geformter Komponenten stattfindet, die in der Ruheposition voneinander entfernt sind, und in der Sperrposition einander berühren.

Es ist ferner denkbar, dass das Steuerrohr im zum Zusammenwirken vorgesehenen Bereich der Innenwand Nuten, Bohrungen oder andere Aussparungen aufweist, welche eine Kombination aus Form- und Kraftschluss erlauben.

Nach einer Ausführungsform ist der Grundkörper an seinem oberen Ende zum Übergreifen der Klemmfaust eines Fahrradvorbaus, und an seinem unteren Ende zum Zusammenwirken mit einer Einschlagkralle eines gewindefreien Gabelschaft-Steuersatzsystems eingerichtet. Derartige Steuersatzsysteme sind unter dem Namen "Ahead"-System bekannt.

Demnach "verlängert" die erfindungsgemäße Vorrichtung aus Sicht des Steuersatzes konstruktiv lediglich die Spannschraube, welche von außen zugänglich ist und mit der Einschlagkralle, die im Gabelschaftrohr eingeschlagen ist, anspannend zusammenwirkt. Es muss lediglich ausreichend Platz in längsaxialer Richtung im Gabelschaftrohr vorhanden sein, um die Vorrichtung zwischen Oberkante der Klemmfaust des Vorbaus und (nach unten verschobener) Einschlagkralle unterzubringen.

Im unteren Bereich der Vorrichtung, genauer, des Grundkörpers, ist hierfür eine Bohrung vorgesehen, durch welche eine Spannschraube gesteckt wird, die dann mit der darunter liegenden Einschlagkralle in bekannter Art zusammenzuwirken. Es ist klar, dass zum Montieren und Justieren des Vorbaus diese Spannschraube zugänglich gemacht sein muss; dies ist auf einfacher Weise dadurch möglich, dass die im Grundkörper befindlichen Komponenten nach oben herausnehmbar sind, um bei Bedarf an die Schraube zu gelangen.

Da der Schließzylinder zusammen mit dem Drehschieber eine Einheit bildet, muss auch nur diese Einheit aus dem Grundkörper herausgezogen werden, was sehr einfach und schnell vonstatten geht. Anzumerken ist jedoch, dass besagtes Herausnehmen dann, und nur dann, möglich ist, wenn sich der Drehschieber in der Ruheposition befindet, da er nur dann ein axiales Herausziehen erlaubt. Demnach kann nur eine durch Besitz des Schlüssels autorisierte Person durch Entsperren der Vorrichtung diesen Vorgang durchführen.

Tatsächlich muss ein Fahrrad mit "Ahead"-System nur geringfügig angepasst werden (Sperrbohrung), um mit der erfindungsgemäßen Vorrichtung ausgestattet werden zu können. Zugleich schützt die Vorrichtung auch vor einem Abschrauben des Vorbaus bzw. einem Herausnehmen der Gabel, da die Schraube im Normalbetrieb nicht mehr zugänglich ist.

Nach einer weiteren Ausführungsform umfasst die Vorrichtung eine zum Einbau in das offene Ende des Oberrohrs geeignete Reduzierhülse, welche ihrerseits die Sperrbohrung zum Zusammenwirken mit dem Sperrbolzen aufweist. Die Reduzierhülse, bzw. deren Sperrbohrung, verläuft koaxial mit der Achse des Sperrbolzens, der in der Sperrposition in sie eintaucht. Die Reduzierhülse verstärkt (bei geeigneter Materialwahl) einerseits die Sperrbohrung, die andernfalls durchaus auch ohne Reduzierhülse direkt ins Steuerrohr, oder in die Öffnung des Oberrohrs, eingreifen kann. Da besagte Öffnung jedoch unter Umständen recht groß ausfällt, und das Material bei modernen Rahmen sehr dünnwandig ist, ist eine Verstärkung und Verkleinerung der jeweiligen, die Sperrbohrung bereitstellenden Öffnung mittels der Reduzierhülse von Vorteil.

Es sei angemerkt, dass die Sperrbohrung im Steuerrohr bevorzugt im Bereich der Öffnung des Ober- oder Unterrohrs liegt, da hier in vielen Fällen bereits Öffnungen vorhanden sind und nicht extra eingebracht werden müssen. Zudem bleibt die Sperrbohrung dann von außen her unsichtbar und unzugänglich. Sie kann jedoch auch an anderer Stelle (außerhalb der Bereiche angeschweißter Rohre) eingebracht sein.

Nach einer weiteren Ausführungsform umfasst die Vorrichtung einen zwischen Gabelschaftrohr und Steuerrohr einsetzbaren, mit dem Steuerrohr lösbar verbindbaren Reduzierring. Dieser hat einerseits die Aufgabe, den unter Umständen recht großen Spalt zwischen Gabelschaft- und Steuerrohr zu verkleinern und so ein seitliches Einknicken des Grundkörpers unter Krafteinwirkung zu verhindern. Zugleich verstärkt der Reduzierring die Wand des Steuerrohrs im entsprechenden Bereich, was die Sicherheit gegen Beschädigung weiter verringert. Somit ermöglicht der Reduzierring, die Vorrichtung auch in druckempfindlichen Rahmen, beispielsweise aus Carbon, oder in dünnwandigen Rahmen, beispielsweise aus Aluminiumlegierungen, einzubauen, weil auf diese Weise die Drehmomentkräfte, die durch den Lenker verursacht werden, gleichmäßig entlang des Umfangs verteilt werden.

Zur Befestigung können am Umfang verteilte Gewindestifte oder dergleichen dienen, die zur Montage und Demontage von innen her eingeschraubt und festgezogen werden können.

Vorzugsweise ist der Reduzierring im Bereich der Öffnung des Gabelschaftrohrs angeordnet, also dort, wo der Sperrbolzen durch dieses hindurchtritt. Somit verstärkt er auch diesen Bereich des Gabelschaftrohrs. Es ist klar, dass sich die Öffnung auch durch den Reduzierring erstrecken muss. Da der Reduzierring mit der Wand des Steuerrohrs verbunden ist, wird somit die Fläche, mit der der Sperrbolzen verriegelnd zusammenwirken kann, vergrößert.

Insbesondere ist auch denkbar, dass sich die Sperrbohrung überhaupt nur im Reduzierring befindet, der dann gewissermaßen als Teil des Steuerrohrs anzusehen ist; dies entspricht einem "indirekten" Zusammenwirken von Sperrbolzen und Steuerrohr. Auf diese Weise muss die Sperrbohrung nicht in das - unter Umständen empfindliche - Material des Steuerrohrs eingebracht werden. Zudem kann die Vorrichtung rückstandsfrei wieder entfernt werden, wenn der Reduzierring auch wieder aus dem Steuerrohr entfernt wird.

Der Reduzierring kann ebenso anstelle der Sperrbohrung zum Eingreifen eine Fläche zum kraftschlüssigen Angreifen (s.o.) bereitstellen.

Nach einer weiteren Ausführungsform umfasst die Vorrichtung ein Adapterrohr, welches zwischen Reduzierring und Gabelschaftrohr angeordnet ist, mit dem es lösbar verbindbar ist. Das Adapterrohr verstärkt demnach das Gabelschaftrohr. Es ist klar, dass es eine den Sperrbolzen durchlassende Öffnung aufweisen muss, wenn es sich im entsprechenden Bereich befindet. Dies ist bevorzugt, da so auch der kritische Bereich um den Sperrbolzen stabilisiert und verstärkt wird. Es ist klar, dass die Wandstärken von Reduzierring und Adapterrohr aufeinander, und auf Gabelschaft- und Steuerrohr abgestimmt sein müssen. Insbesondere muss sich das Adapterrohr frei auf dem Reduzierring drehen lassen, sofern die Drehung nicht durch den Sperrbolzen blockiert wird. Vorzugsweise ist das Adapterrohr aus hochfestem Metall gefertigt.

Eine weitere Ausführungsform der Vorrichtung sieht vor, dass der Drehschieber an einem (untenliegenden) Ende einer Verlängerung angeordnet ist, deren anderes (oberes) Ende mit dem unteren Ende des Schließzylinders verbunden ist.

Typischerweise sind Standardausführungen von Schließzylindern nur wenige Zentimeter kurz. Würde der Drehschieber unmittelbar am unteren Ende des Schließzylinders angeordnet sein, würde sich letztlich auch der Sperrbolzen recht nah am oberen Ende des Gabelschaftrohrs befinden müssen. Allerdings liegt in vielen Fällen die Oberkante des Steuerrohrs deutlich unterhalb dieser weit oben liegenden Stelle, da sich zwischen dieser Oberkante noch oberes Lenklager, Abstandhalter und Klemmfaust des Vorbaus befinden. Entweder müsste der Schließzylinder entsprechend versenkt werden, was die Zugänglichkeit mit einem Schlüssel erschwert, oder das untenliegende Ende des Schließzylinders wird, wie beschrieben, verlängert. Dies ist auch deswegen unproblematisch, da die Form des Drehschiebers wenig mit dem Ende eines Standard-Schließzylinders gemein hat und daher im Normalfall ohnehin als separates Teil gefertigt und anschließend mit dem Schließzylinder verbunden werden muss.

Mithin ist das Vorsehen einer entsprechenden Verlängerung ohne viel Mehraufwand möglich. Es ist klar, dass die Verlängerung fest mit dem Ende des Schließzylinders verbunden sein muss, beispielsweise mittels beidseitig angreifender, einen Zapfen mit zwei seitlichen Abflachungen dort klemmender Gewindestifte.

Vorzugsweise ist zwischen Schließzylinder und Verlängerung eine Rastpunkte aufweisende Scheibe angeordnet, die verdrehsicher mit dem Gehäuse des Schließzylinders verbunden ist, und die mit in der zum Schließzylinder weisenden Stirnfläche der Verlängerung angeordneten Rastkugeln (federnden Druckstücken) zusammenwirkt.

Die Scheibe kann U-förmig ausgestaltet sein und mit den Schenkeln des "U" beidseitige Abflachungen umgreifen, wie sie typischerweise am Gehäuse eines Schließzylinders vorhanden sind, so dass die Scheibe nicht verdreht werden kann. Sie weist eine Bohrung auf, durch welche hindurch Schließzylinder-Innenteil und Verlängerung ragen und miteinander verbunden sind.

Die Rastkugeln sind dann in der Stirnfläche der Verlängerung angeordnet. Diese dreht sich beim Betätigen relativ zum Gehäuse, und somit zur Scheibe. Wenn die Rastkugeln in den Rastpunkten liegen, befindet sich die Vorrichtung in der Ruhe- bzw. in der Sperrposition. Die Rastkugeln können einen Versatz von z.B. 5°±2° zu den vom Schließzylinder vorgegebenen Endpunkten aufweisen, um so einen Spielausgleich für den Schließzylinder bereitzustellen. Der Versatz ist abhängig vom jeweilig verbauten Schließzylinder und kann auch einen anderen Wert aufweisen.

Somit wird das typischerweise vorhandene Spiel, welches in einem Zylinderschloss vorhanden ist, mittels der Druckstücke und der Scheibe neutralisiert und ausgeglichen, die optional radial versetzte Rastpunkte aufweist. Wird der Schließzylinder mit dem Schlüssel gedreht und der höchste Punkt in der Verriegelungsposition erreicht, passen diese beiden Elemente ineinander, hörbar durch ein Rastgeräusch. Dies hat den Vorteil, dass, wenn der Verriegelungsbolzen in der Sperrstellung ist und aufgrund der Feder unter Druck steht, dieser nicht direkt auf den Schließzylinder übergeht, was andernfalls ein Einstecken des Schlüssels in den Schließzylinder und ein normales Entriegeln erschweren würde, da die Stifte im Inneren des Schließzylinders, je nach Kontur des Schlüssels ohne Unterbrechung auf das Schlüsselprofil treffen müssen, damit der Schließzylinder einwandfrei funktioniert. Anders ausgedrückt, die Rastpunkte ermöglichen ein exaktes Einnehmen der Ruhe- und insbesondere der Sperrposition, in welcher sich der Schlüssel leicht herausziehen lassen muss. Dies wird dadurch erreicht, dass der ohne Hilfsmittel u.U. nicht exakt definierbare End-Rotationswinkel des Drehschiebers in der Nähe der Sperrposition unter Zuhilfenahme der Rastpunkte exakt definierbar wird, wobei er so gewählt ist, dass der Schließzylinder leichtgängig betätigbar ist.

Nach einer weiteren Ausführungsform der Vorrichtung weist der Drehschieber, in axialer Richtung gesehen, ein ellipsoides oder linsenförmiges Profil auf. Demnach sitzt der Drehschieber exzentrisch auf der Endfläche der Verlängerung und ist an seiner zur inneren Mantelfläche des Grundkörpers hin weisenden Außenfläche an diese Mantelfläche angepasst, also wie beschrieben abgerundet.

Auch die zur Längsachse hin weisende Abrundung ist vorteilhaft, weil sie gut zum Betätigen des Kopfes des Sperrbolzens geeignet ist. Es ist jedoch klar, dass auch anderen Arten des mechanischen Zusammenwirkens denkbar sind, welche andere Kontaktgeometrien erfordern oder bevorzugen.

Nach einer weiteren Ausführungsform umfasst die Vorrichtung einen GPS-Empfänger und einen Datensender, welcher mittels eines bekannten Funkprotokolls (GSM, LET, WLAN-Bluetooth, LoRaWAN, etc.) die Position der Vorrichtung, und somit des mit ihr verbundenen Fahrrads, über ein Funknetz bereitstellen kann. Derartige GPS-Sender sind an sich bekannt; in Verbindung mit der erfindungsgemäßen Vorrichtung und der ihr innewohnenden einfachen Demontage durch Befugte einerseits (z.B. zum Batteriewechsel oder zum Aufladen), sowie der nahezu unmöglichen zerstörungslosen Entfernung durch Unbefugte andererseits, bietet sich jedoch der Vorteil, dass selbst bei Detektion des Senders durch entsprechende Hardware dieser eben nicht entfernt und somit unbrauchbar gemacht werden kann. Es ist klar, dass sich die GPS- und Sendeeinheit an entsprechend geschützter Stelle in oder hinter dem Schließzylinder befinden müssen.

### Figurenbeschreibung

Nachfolgend wird die Erfindung anhand von Figuren beispielhaft erläutert. Dabei zeigt
- **Figur 1**: eine Explosionsansicht der Baugruppe "Schließzylinder mit Drehschieber";
- **Figur 2**: eine Draufsicht auf die Scheibe mit Rastpunkten;
- **Figur 3**: eine Frontalsicht des Drehschiebers;
- **Figur 4**: eine Schrägansicht des Drehschiebers;
- **Figur 5**: eine Explosionsansicht der Baugruppe "Grundkörper mit Sperrbolzen";
- **Figur 6**: eine Schnittansicht durch eine Ausführungsform der erfindungsgemäßen Vorrichtung in Einbauposition.

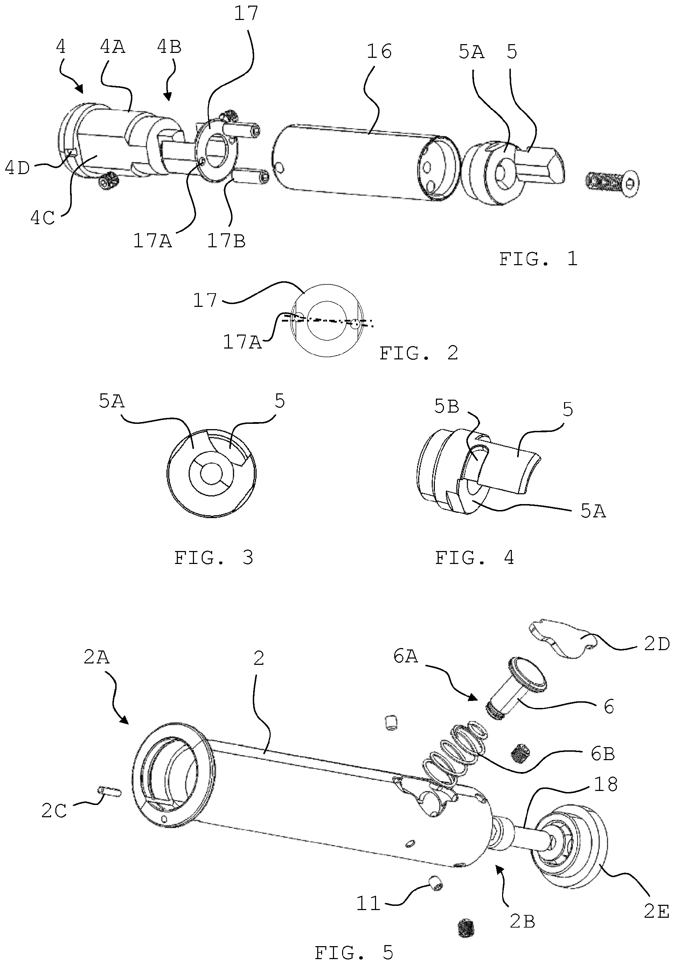

In der **Figur 1** ist eine Explosionsansicht der Baugruppe "Schließzylinder mit Drehschieber" dargestellt. Links im Bild ist der Schließzylinder 4 mit seinem Gehäuse 4A gezeigt. Sein unteres Ende 4B weist in Richtung einer Verlängerung 16, an deren unterem Ende der exzentrische Drehschieber 5 mit Montagefuß 5A angeschraubt ist.

Zwischen unterem Ende 4B des Schließzylinders 4 und dem oberen Ende der Verlängerung 16 befindet sich eine Rastpunkte 17A aufweisende Scheibe 17. Diese ist verdrehsicher mit dem Gehäuse 4A des Schließzylinders 4 verbunden, indem sie U-förmig ausgestaltet ist und mit ihren Schenkeln die abgeflachten Seitenflächen des Gehäuses 4A umgreift. Die Rastpunkte 17A wirken mit Rastkugeln 17B zusammen, die in der zum Schließzylinder 4 weisenden Stirnfläche der Verlängerung 16 angeordnet sind (erkennbar sind die Druckstifte, in welchen sich die Rastkugeln 17B befinden).

**Figur 2** zeigt eine Draufsicht auf die Scheibe 17 mit Rastpunkten 17A. Die Rastpunkte 17A sind in diesem Beispiel radial um ca. 5° versetzt, erkennbar an der Abweichung von der Horizontalen, welche im Bild senkrecht auf den Innenwänden der Schenkel steht. Die tatsächliche Größe der Abweichung ist so zu wählen, dass in der Sperrposition ein leichtes Betätigen des Schließzylinders ermöglicht ist.

**Figur 3** und **Figur 4** widmen sich im Detail dem Drehschieber 5. In Fig. 3 ist eine Frontalansicht dargestellt, auf welcher neben der exzentrischen Lage auch das in etwa linsenförmige Querschnittsprofil des Drehschiebers 5 erkennbar ist, wobei der Querschnitt ein spitzes und ein gekürztes Ende (rechts im Bild) aufweist. Fig. 4 lässt die an der Außenseite des Drehschiebers 5 angeordnete Nut erkennen, welche mit einer hier nicht zu sehenden Sicherung 11 zusammenwirkt, auf welche weiter unten noch eingegangen wird.

In **Figur 5** ist eine Explosionsansicht der Baugruppe "Grundkörper mit Sperrbolzen" gezeigt. Der Grundkörper 2 mit zylindrischer Grundform weist links im Bild sein in Einbauposition oberes Ende 2A auf. In dieses kann die in Fig. 1 gezeigte Baugruppe (nicht dargestellt) eingeschoben und verdrehsicher befestigt werden. Hierfür ist im Bereich des oberen Endes 2A ein Stift 2C eingesetzt, der mit einer Einkerbung 4D des Gehäuses 4A des Schließzylinders 4 zusammenwirkt (s. Fig. 1). Außerdem ist hier eine umlaufende Nut vorhanden, in welcher ein Sprengring einsetzbar ist (nicht dargestellt), welcher die Baugruppe der Fig. 1 gegen Herausfallen oder Herausziehen sichert.

Durch eine seitliche Öffnung eingesetzt ist der Sperrbolzen 6. Mittels einer Feder 6B wird er in radialer Richtung in Richtung des Zentrums des Grundkörpers 2 hinein gedrückt. Um ein vollständiges Hineindrücken zu verhindern, weist sein in Einbauposition außerhalb der Mantelfläche des Grundkörpers befindliches distales Ende 6A eine umlaufende Nut für einen Sicherungsring (nicht gezeigt) auf. Demnach ist der Sperrbozen 6 in seiner Ruheposition weitestmöglich zurückgezogen (die Endposition wird durch den Sicherungsring bestimmt). Ein Deckel 2D dient dem Verschießen der seitlichen Öffnung, um den Innenraum beispielsweise vor Witterungseinflüssen wie möglicherweise in das Gabelschaftrohr eindringendem Wasser oder von unten eindringendem Staub zu schützen.

Durch eine Bohrung (ohne Bezugszeichen) kann eine als Sicherung 11 dienende, in den Innenraum des Grundkörpers 2 hineinragende Madenschraube gedreht werden.

Rechts im Bild erkennbar ist der am unteren Ende 2B liegende Abschluss 2E des Grundkörpers 2, der mit diesem fest verbindbar ist. Durch den Abschuss 2E kann eine Klemmschraube 18 gesteckt werden, welche - bei ausgebauter Baugruppe "Schließzylinder mit Drehschieber" - durch das obere Ende 2A des Grundkörpers 2 zugänglich ist. Somit kann - nach Einsetzen des Grundkörpers in das Gabelschaftrohr (nicht gezeigt) - dieser mittels der Klemmschraube 18 mit einer Einschlagkralle (nicht gezeigt) verspannt werden, um ein entsprechendes Steuersatzsystem (nicht gezeigt) spielfrei einstellen zu können.

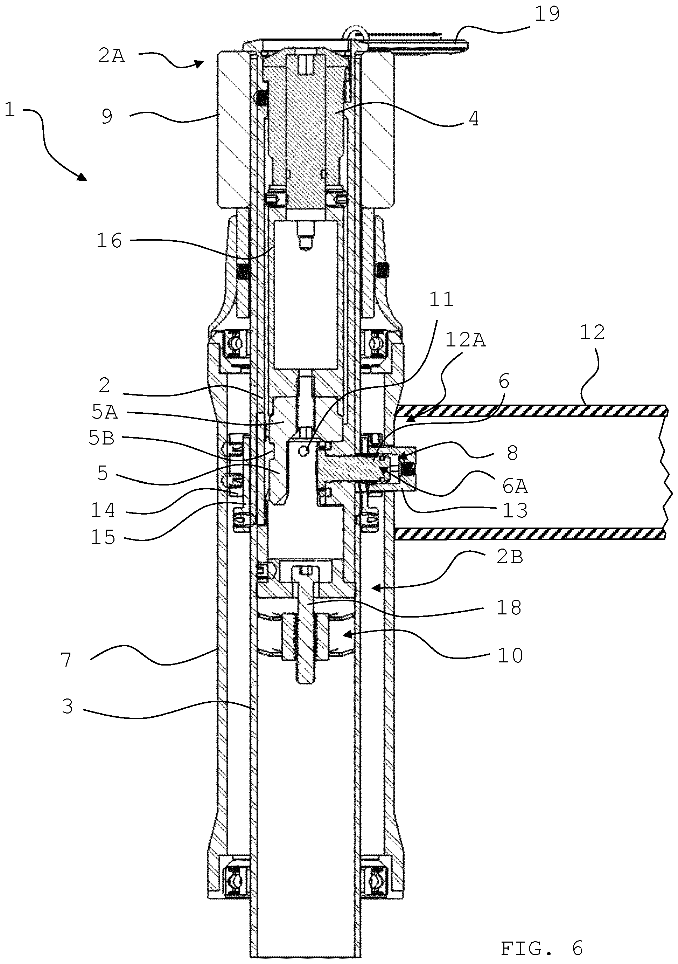

In der **Figur 6****,** in der nicht alle bereits eingeführten und abgebildeten Komponenten mit Bezugszeichen versehen sind, ist eine Schnittansicht der Vorrichtung, eingebaut in das Steuerrohr mit Gabelschaft eines Fahrrades, gezeigt. Das Steuerrohr 7 umgibt das Gabelschaftrohr 3. Letzteres ist mittels eines nicht näher definierten, bevorzugt jedoch als gewindefreies Gabelschaft-Steuersatzsystem eingerichteten Steuersatz über Lager (ohne Bezugszeichen) rotierbar verbunden.

Der Grundkörper 2 übergreift an seinem oberen Ende 2A die Klemmfaust 9 eines Fahrradvorbaus (nicht gezeigt). An seinem unteren Ende 2B wirkt er mittels der Klemmschraube 18 mit einer Einschlagkralle 10 zusammen.

Weiter erkennbar ist die Sicherung 11, welche den Drehschieber 5, der sich vorliegend in der Ruheposition befindet, in axialer Richtung blockieren kann, so dass er dann nicht in Richtung des oberen Endes 2A des Grundkörpers 2 bewegbar ist, wenn er sich in der (nicht gezeigten) Sperrposition befindet. Der Drehschieber 5 wirkt mit dem Sperrbolzen 6, der in radialer Richtung verschiebbar in der Mantelfläche des Grundkörpers 2 angeordnet ist, so zusammen, dass er von einer (in Fig. 6 nicht gezeigten Sperrbolzen-)Ruheposition, in welcher sein distales Ende 6A vom Steuerrohr 7 beabstandet wäre, wie dargestellt in eine Blockierposition vorgeschoben ist, in welcher sein distales Ende 6A mit dem Steuerrohr 7 verriegelnd zusammenwirkt. Somit ist eine Rotation zwischen Gabelschaftrohr 3 und Steuerrohr 7 blockiert.

Dementsprechend erfolgt das Zusammenwirken mittels formschlüssigen Eingreifens des Sperrbolzens 6 in die im Steuerrohr 7 angeordnete Sperrbohrung 8. Lediglich aus Gründen der Übersichtlichkeit ist vorliegend zwar der Drehschieber 5 in Ruheposition, der Sperrbolzen 6 hingegen in Sperrposition dargestellt, so dass auch die andernfalls verdeckte Sicherung 11 sichtbar bleibt. Es ist klar, dass im Normalfall der Sperrbolzen 6 aufgrund der Belastung durch Feder 6B (nicht erkennbar) in Richtung des Drehschiebers, und somit in seine Ruheposition, gedrückt würde.

Ferner ist eine zum Einbau in das offene Ende 12A des Oberrohrs 12 geeignete Reduzierhülse 13 zu sehen, welche ihrerseits die Sperrbohrung 8 zum Zusammenwirken mit dem Sperrbolzen 6 aufweist. Die Reduzierhülse 13 verstärkt auch das Steuerrohr 7.

Erkennbar ist auch ein zwischen Gabelschaftrohr 3 und Steuerrohr 7 eingesetzter, mit dem Steuerrohr 7 über Gewindestifte lösbar verbundener Reduzierring 14, der das Steuerrohr 7 ebenfalls verstärkt und dessen Innenseite er schützt.

Schließlich ist ein Adapterrohr 15 vorhanden, welches zwischen Reduzierring 14 und Gabelschaftrohr 3 angeordnet ist, mit dem es lösbar verbunden ist. Auch das Adapterrohr 15 nutzt zur lösbaren Verbindung Gewindestifte. Es schützt und stabilisiert das Gabelschaftrohr 3. Es ist klar, dass Adapterrohr 15 und Reduzierring 14 jeweils eine (rechts im Bild liegende) Öffnung für den Sperrbolzen 6 aufweisen, der diese beiden Komponenten durchtreten muss, um mit der Sperrbohrung 8 zusammenwirken zu können.

Eine Abdeckung 19 (aufgeklappt dargestellt) dient dem Verschließen des oberen Endes 2A des Grundkörpers 2 zum Schutz des nur schematisch gezeichneten Schließzylinders 4, beispielsweise vor Witterungseinflüssen wie von oben eindringendem Wasser oder von unten eindringendem Staub.

### Bezugszeichenliste

- 1: Vorrichtung
- 2: Grundkörper
- 2A: oberes Ende
- 2B: unteres Ende
- 2C: Stift
- 2D: Deckel
- 2E: Abschluss
- 3: Gabelschaftrohr
- 4: Schließzylinder
- 4A: Gehäuse
- 4B: unteres Ende
- 4C: Seitenfläche
- 4D: Einkerbung
- 5: Drehschieber
- 5A: Montagefuß
- 5B: Nut
- 6: Sperrbolzen
- 6A: distales Ende
- 6B: Feder
- 7: Steuerrohr
- 8: Sperrbohrung
- 9: Klemmfaust
- 10: Einschlagkralle
- 11: Sicherung
- 12: Oberrohr
- 12A: offenes Ende
- 13: Reduzierhülse
- 14: Reduzierring
- 15: Adapterrohr
- 16: Verlängerung
- 17: Scheibe
- 17A: Rastpunkte
- 17B: Rastkugeln
- 18: Klemmschraube

## Patentansprüche

1. Vorrichtung (1) zum Sichern eines Fahrrades gegen unerwünschte Benutzung, die Vorrichtung umfassend
- einen Grundkörper (2), welcher zum Einbau in das Gabelschaftrohr (3) einer Fahrradgabel eingerichtet und verdrehsicher mit diesem verbindbar ist, sowie
- einen Schließzylinder (4), welcher in das obere Ende (2A) des Grundkörpers (2) eingesetzt, dort mit seinem Gehäuse (4A) drehsicher verbunden und gegen Herausziehen gesichert ist,
wobei der Schließzylinder (4)
- zwischen einer offenen Position und einer Sperrposition rotierend verstellbar ist und
- an seinem unteren Ende (4B) einen exzentrischen Drehschieber (5) aufweist, der lediglich in der Sperrposition derart mit einem in radialer Richtung verschiebbar in der Mantelfläche des Grundkörpers (2) angeordneten Sperrbolzen (6) zusammenwirkt, so dass dieser Sperrbolzen (6) von einer Ruheposition, in welcher sein distales Ende (6A) vom Steuerrohr (7) beabstandet ist, in eine Blockierposition vorschiebbar ist, in welcher sein distales Ende (6A) mit dem Steuerrohr (7) verriegelnd zusammenwirkt, so dass eine Rotation zwischen Gabelschaftrohr (3) und Steuerrohr (7) blockierbar ist,
**dadurch gekennzeichnet, dass** der Grundkörper (2) eine innenliegende, mit dem Drehschieber (5) zusammenwirkende Sicherung (11) gegen axiales Herausziehen des Schließzylinders (4) lediglich in Sperrposition aufweist.

2. Vorrichtung (1) nach Anspruch 1, wobei das Zusammenwirken mittels formschlüssigen Eingreifens des Sperrbolzens (6) in eine im Steuerrohr (7) angeordnete Sperrbohrung (8) erfolgt.

3. Vorrichtung (1) nach Anspruch 1, wobei das Zusammenwirken mittels kraftschlüssigen Angreifens des Sperrbolzens (6) an das Innere des Steuerrohrs (7) erfolgt.

4. Vorrichtung (1) nach Anspruch 1, wobei der Grundkörper (2) an seinem oberen Ende (2A) zum Übergreifen der Klemmfaust (9) eines Fahrradvorbaus, und an seinem unteren Ende (2B) zum Zusammenwirken mit einer Einschlagkralle (10) eines gewindefreien Gabelschaft-Steuersatzsystems eingerichtet ist.

5. Vorrichtung (1) nach einem der vorhergehenden Ansprüche, ferner umfassend eine zum Einbau in das offene Ende (12A) des Oberrohrs (12) geeignete Reduzierhülse (13), welche ihrerseits die Sperrbohrung (8) zum Zusammenwirken mit dem Sperrbolzen (6) aufweist.

6. Vorrichtung (1) nach einem der vorhergehenden Ansprüche, ferner umfassend einen zwischen Gabelschaftrohr (3) und Steuerrohr (7) einsetzbaren, mit dem Steuerrohr (7) lösbar verbindbaren Reduzierring (14).

7. Vorrichtung (1) nach Anspruch 6, ferner umfassend ein Adapterrohr (15), welches zwischen Reduzierring (14) und Gabelschaftrohr (3) angeordnet ist, mit dem es lösbar verbindbar ist.

8. Vorrichtung (1) nach einem der vorhergehenden Ansprüche, wobei der Drehschieber (5) an einem Ende einer Verlängerung (16) angeordnet ist, deren anderes Ende mit dem unteren Ende (4B) des Schließzylinders (4) verbunden ist.

9. Vorrichtung (1) nach Anspruch 8, wobei zwischen Schließzylinder (4) und Verlängerung (16) eine Rastpunkte (17A) aufweisende Scheibe (17) angeordnet ist, die verdrehsicher mit dem Gehäuse (4A) des Schließzylinders (4) verbunden ist, und mit in der zum Schließzylinder (4) weisenden Stirnfläche der Verlängerung (16) angeordneten Rastkugeln (17B) zusammenwirkt.

10. Vorrichtung (1) nach einem der vorhergehenden Ansprüche, wobei der Drehschieber (5) in axialer Richtung gesehen ein ellipsoides oder linsenförmiges Profil aufweist.

## Claims

1. Apparatus (1) for securing a bicycle against undesired use, the apparatus comprising
- a main body (2) which is designed for installation in the steerer tube (3) of a bicycle fork and can be connected thereto in a non-rotatable manner, and
- a lock cylinder (4), which is inserted into the upper end (2A) of the main body (2), connected there to its housing (4A) in a non-rotatable manner and secured against removal, wherein the lock cylinder (4)
- is rotatably moveable between an open position and a locking position and
- has at its lower end (4B) an eccentric rotary slide (5) which, only in the locking position, interacts with a lock bolt (6) arranged displaceably in the radial direction in the lateral surface of the main body (2) in such a way that this lock bolt (6) can be moved from a rest position, in which its distal end (6A) is at a distance from the head tube (7), into a blocking position, in which its distal end (6A) interacts with the head tube (7) in a locking manner, so that rotation between the steerer tube (3) and the head tube (7) can be blocked,
**characterised in that** the main body (2) has an internal securing means (11) cooperating with the rotary slide (5) to prevent axial removal of the lock cylinder (4) only in the locked position.

2. The apparatus (1) according to claim 1, wherein the interaction is effected by means of positive engagement of the lock bolt (6) in a lock bore (8) arranged in the head tube (7).

3. The apparatus (1) according to claim 1, wherein the interaction is effected by means of non-positive engagement of the lock bolt (6) with the interior of the head tube (7).

4. The apparatus (1) according to claim 1, wherein the main body (2) is adapted at its upper end (2A) to engage over the steerer tube clamp (9) of a bicycle stem, and at its lower end (2B) to interact with a star nut (10) of a threadless steerer tube headset system.

5. The apparatus (1) according to any of the preceding claims, further comprising a reduction sleeve (13) suitable for installation in the open end (12A) of the top tube (12), which in turn has the lock bore (8) for co-operation with the lock bolt (6).

6. Apparatus (1) according to any of the preceding claims, further comprising a reduction washer (14) insertable between the steerer tube (3) and the head tube (7) and detachably connectable to the head tube (7).

7. Apparatus (1) according to claim 6, further comprising an adapter tube (15) which is arranged between reduction washer (14) and steerer tube (3), to which it is detachably connectable .

8. Apparatus (1) according to any of the preceding claims, wherein the rotary slide (5) is arranged at one end of an extension (16), the other end of which is connected to the lower end (4B) of the lock cylinder (4).

9. Apparatus (1) according to claim 8, wherein a disc (17) having snap-in points (17A) is arranged between the lock cylinder (4) and the extension (16), which disc is connected to the housing (4A) of the lock cylinder (4) in a non-rotatable manner and interacts with snap-in balls (17B) arranged in the end face of the extension (16) pointing towards the lock cylinder (4).

10. Apparatus (1) according to any of the preceding claims, wherein the rotary slide (5) has an ellipsoidal or lenticular profile when viewed in the axial direction.

## Revendications

1. Dispositif (1) pour sécuriser un vélo contre une utilisation indésirable, le dispositif comprenant :
- un corps de base (2) qui est conçu pour être monté dans le tube de tige de fourche (3) d'une fourche de vélo et qui peut être relié à celui-ci de manière à ne pas pouvoir tourner, ainsi que
- un cylindre de fermeture (4) qui est inséré dans l'extrémité supérieure (2A) du corps de base (2), y est relié par son boîtier (4A) de manière à ne pas pouvoir tourner et ne pas pouvoir être retiré,
dans lequel le cylindre de fermeture (4)
- est réglable en rotation entre une position ouverte et une position de blocage et
- présente à son extrémité inférieure (4B) un coulisseau rotatif excentrique (5) qui, uniquement dans la position de blocage, coopère avec un boulon de blocage (6) disposé de manière à pouvoir coulisser dans la direction radiale dans la surface périphérique du corps de base (2), de sorte que ce boulon de blocage (6) peut être déplacé d'une position de repos, dans laquelle son extrémité distale (6A) est espacée du tube de direction (7), dans une position de blocage dans laquelle son extrémité distale (6A) coopère avec le tube de direction (7) de manière à le verrouiller, de sorte qu'une rotation entre le tube de tige de fourche (3) et le tube de direction (7) peut être bloquée,
**caractérisé en ce que** le corps de base (2) présente un dispositif de sécurité (11) intérieur, qui coopère avec le coulisseau rotatif (5) pour empêcher l'extraction axiale du cylindre de fermeture (4) uniquement en position de blocage.

2. Dispositif (1) selon la revendication 1, dans lequel la coopération s'effectue au moyen d'un engagement par complémentarité de forme du boulon de blocage (6) dans un perçage de blocage (8) disposé dans le tube de direction (7).

3. Dispositif (1) selon la revendication 1, dans lequel la coopération s'effectue au moyen d'une prise par adhérence du boulon de blocage (6) sur l'intérieur du tube de direction (7).

4. Dispositif (1) selon la revendication 1, dans lequel le corps de base (2) est conçu, à son extrémité supérieure (2A), pour s'engager sur la mâchoire de serrage (9) d'une potence de vélo, et, à son extrémité inférieure (2B), pour coopérer avec une griffe à enfoncer (10) d'un système de jeu de direction à tige de fourche non filetée.

5. Dispositif (1) selon l'une des revendications précédentes, comprenant en outre une douille de réduction (13) adaptée à être montée dans l'extrémité ouverte (12A) du tube supérieur (12), ladite douille de réduction présentant elle-même le perçage de blocage (8) pour coopérer avec le boulon de blocage (6) .

6. Dispositif (1) selon l'une des revendications précédentes, comprenant en outre une bague de réduction (14) insérable entre le tube de tige de fourche (3) et le tube de direction (7) et pouvant être reliée de manière détachable au tube de direction (7) .

7. Dispositif (1) selon la revendication 6, comprenant en outre un tube adaptateur (15) qui est disposé entre la bague de réduction (14) et le tube de tige de fourche (3), auquel il peut être relié de manière détachable.

8. Dispositif (1) selon l'une des revendications précédentes, dans lequel le coulisseau rotatif (5) est disposé à une extrémité d'une rallonge (16) dont l'autre extrémité est reliée à l'extrémité inférieure (4B) du cylindre de fermeture (4).

9. Dispositif (1) selon la revendication 8, dans lequel une rondelle (17) présentant des points d'encliquetage (17A) est disposée entre le cylindre de fermeture (4) et la rallonge (16), laquelle rondelle est reliée au boîtier (4A) du cylindre de fermeture (4) de manière à ne pas pouvoir tourner et coopère avec des billes d'encliquetage (17B) disposées dans la face frontale de la rallonge (16) tournée vers le cylindre de fermeture (4).

10. Dispositif (1) selon l'une des revendications précédentes, dans lequel le coulisseau rotatif (5) présente, vu dans la direction axiale, un profil ellipsoïdal ou lenticulaire.
